# EUROPEAN PATENT SPECIFICATION

(11) **EP 1 492 941 B1**
(45) Date of publication and mention of the grant of the patent: **21.01.2009**
(21) Application number: 03723505.8
(22) Date of filing: 09.04.2003
(51) Int. Cl.: F01K 23/10

(54) **STEAM AND GAS TURBINE INSTALLATION**
DAMPF- UND GASTURBINENANLAGE
INSTALLATION DE TURBINE A VAPEUR ET A GAZ

(30) Priority: 10.04.2002 NL 1020350
(43) Date of publication of application: 05.01.2005
(73) Proprietor: Ouwerkerk, Henk, 5707 ZC Helmond (NL)
(72) Inventor: Ouwerkerk, Henk, 5707 ZC Helmond (NL)
(74) Representative: Valkonet, Rutger
(86) International application number: PCT/NL2003/000271
(87) International publication number: WO 2003/087543

(56) References cited:
- WO-A-94/01657
- DE-C- 826 772
- FR-A- 1 033 897
- US-A- 6 003 298
- PATENT ABSTRACTS OF JAPAN vol. 017, no. 407 (M-1454), 29 July 1993 (1993-07-29) & JP 05 079304 A (HITACHI LTD), 30 March 1993 (1993-03-30)
- PATENT ABSTRACTS OF JAPAN vol. 012, no. 487 (M-778), 20 December 1988 (1988-12-20) & JP 63 208624 A (MITSUI ENG & SHIPBUILD CO LTD), 30 August 1988 (1988-08-30)
- PATENT ABSTRACTS OF JAPAN vol. 2000, no. 13, 5 February 2001 (2001-02-05) & JP 2000 297657 A (ISHIKAWAJIMA HARIMA HEAVY IND CO LTD), 24 October 2000 (2000-10-24)

## Description

The invention relates to a steam and gas turbine installation comprising a gas turbine unit (A) and a steam turbine unit (B), in which the gas turbine unit (A) is built up in part of at least: a gas compressor mounted on a compressor shaft, a combustion chamber and a gas turbine mounted on a gas turbine shaft; and in which steam turbine unit (B) is built up in part of: a closed steam line, at least comprising: a pump, a steam generator, which is in heat-exchanging contact with combustion gases from the gas turbine during operation, a steam turbine mounted on a steam turbine shaft, as well as a condenser.

Steam and gas turbine installations are generally known, and they are used for industrial purposes in various configurations thereof. An example of a steam and gas turbine installation as referred to in the introduction is disclosed in, for example, US patent No US-B1-6,223,518. Such steam and gas turbine installations can be classified into two types, viz. the multi-shaft types and the single-shaft types.

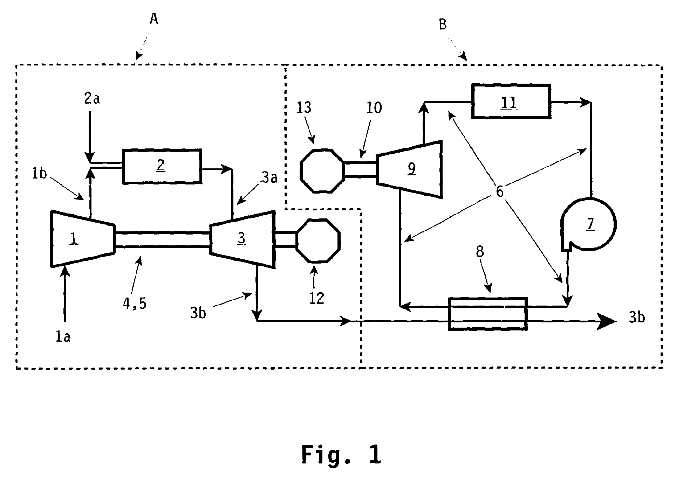

A known multi-shaft variant of a steam and gas turbine installation is shown in the appended Figure 1, for example, in which the installation is built up of a gas turbine unit (A) and a steam turbine unit (B), with the gas turbine unit (A) being built up of at least a gas compressor 1, which is mounted on a gas compressor shaft 4, a combustion chamber 2 and a gas turbine 3 mounted on a gas turbine shaft 5. The gas compressor 1 draws in air via the inlet la, which air is carried to the combustion chamber 2 in compressed form by the gas compressor 1 via the outlet 1b. In the combustion chamber, combustion of said compressed air and fuel being supplied via the inlet 2a takes place, after which the combustion gases exit the combustion chamber 2 and subsequently enter the gas turbine 3 via the outlet 3a. The combustion gases drive the gas turbine 3, causing said gas turbine 3 to rotate jointly with the gas turbine shaft 5 and thus drive a load, which load is indicated at 12 in Figure 1.

The gas compressor 1 and the gas turbine 3 are mounted on the same shaft 4, 5 in this steam and gas turbine installation. This means that the gas turbine 3, which is driven by the combustion gases, also drives the gas compressor 1 for compressing the air being drawn in via the inlet 1a.

The steam turbine unit (B) of the known the steam and gas turbine installation that is shown in Figure 1 is made up of a shortcircuited steam line 6, in which a pump 7 is mounted. A steam generator 8 is furthermore incorporated in the steam line 6, and the steam line 6 is in heat-exchanging contact with combustion gases 3b from the gas turbine 3. Thus, the water passing through the steam generator 8 and the steam line 6 is heated into steam, which steam is passed through the steam turbine 9 mounted on a steam turbine shaft 10. This enables the steam turbine 9 and the steam turbine shaft 10 to drive another load 13. The steam exits the steam turbine 9 via a condenser 11, where the steam cools down and condenses. The pump 7 subsequently pumps the condensed and cooled-down steam (water) in the direction of the steam generator 8 again.

In this multi-shaft version of the prior art steam and gas turbine installation, the residual heat (3b) generated by the gas turbine 3 is used as power for driving the steam turbine 9 and the additional load 13. On the other hand, it is possible to throw the steam turbine 9 out of action in the case of a multi-shaft installation, so that the only power being delivered is the power that is delivered by the gas turbine 3.

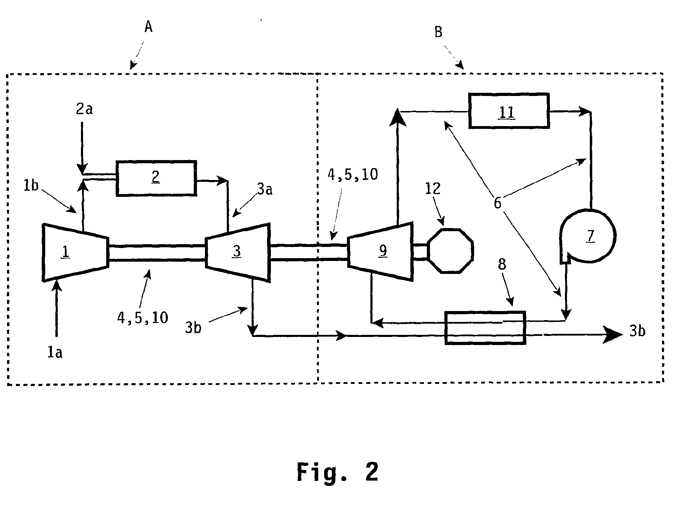

Another embodiment of a known steam and gas turbine installations is the so-called single-shaft variant, an embodiment of which is shown in the appended Figure 2. In this Figure, parts that correspond to parts that are shown in the embodiment of Figure 1 are indicated by the same numeral.

The single-shaft variant and the multi-shaft variant of Figure 1 have the same components, with the gas compressor 1, the gas turbine 3, the steam turbine 9 and the load 12 to be driven being mounted on the same shaft 4, 5, 10 in the single-shaft variant. In contrast to the embodiment of Figure 1, the steam turbine 9 of a single-shaft variant cannot be separately operated or thrown out of action without using a coupling, by means of which the steam turbine 9 can be uncoupled from the gas turbine 3 and the gas compressor 1. However, these additional parts make the single-shaft variant more expensive and more complicated.

Single-shaft steam and gas turbine installations as shown in Figure 2 and as disclosed in the aforesaid US patent US-B1-6,223,518 are used in applications in which the full power output is to be transmitted to a single shaft. One drawback of the single-shaft steam and gas turbine installation is the fact that at least the load 12 and/or the steam turbine 9 must be uncoupled from the shaft upon starting up the installation as a whole, because otherwise an additional external boiler is needed for bringing the installation as a whole up to speed. It is this aspect, too, that renders such a single-shaft installation more complicated and more expensive.

The above variants of known steam and gas turbine installations are relatively complicated and have a number of constructional drawbacks and limitations as regards the transmission of the generated power to a load, as a consequence of which also the overall efficiency of such installations is limited.

A multi-shaft steam and gas turbine installation does not comprise a mechanical coupling between the steam turbine and the gas turbine, it is true, but the generated power of the overall installation is distributed over two outgoing shafts and consequently over two different loads. The single-shaft variant does comprise a mechanical coupling between the steam turbine and the gas turbine, and all the power is transmitted to the load to be driven via one shaft.

The object of the present invention is to provide a steam and gas turbine installation as referred to in the introduction that does not have the drawbacks of the multi-shaft and single-shaft variants. More in particular, it is an object of the invention to provide a steam and gas turbine installations of simple construction, which does not comprise all kinds of complicated additional parts.

In accordance with the invention, the steam and gas turbine installation according to the invention is characterized in that the steam turbine drives the gas compressor of the gas turbine unit during operation. More in particular, the steam turbine and the gas compressor are mounted on the same shaft.

This makes it possible to transmit the power that is generated in this steam turbine unit (B) to the gas turbine via the gas compressor, so that virtually all the power generated by the installation as a whole is transmitted to one shaft via the gas turbine. Furthermore, the utilization of the residual heat from the gas turbine in the steam turbine cycle leads to a higher efficiency. Since all the power that is generated is transmitted to one shaft or load, the overall performance/efficiency of the installation as a whole is thus significantly improved. In addition to that, the installation does not comprise a mechanical coupling between the steam turbine and the gas turbine, because the gas turbine is not mounted on the same shaft as the gas compressor. Thus it is no longer necessary to use an additional uncoupling mechanism, which would only render the device more complicated and more expensive. In addition to that, the steam and gas turbine installation according to the invention are thus characterized by an improved load characteristic in comparison with the embodiments that are already known.

A special embodiment of the steam and gas turbine installation is according to the invention characterized in that the steam turbine drives at least one further gas compressor, which is connected in series with the first gas compressor via an intercooler. The efficiency of the gas turbine unit (A) can be further improved by providing a second gas compressor or more gas compressors.

A more efficient embodiment of the steam and gas turbine installation is characterized in that at least one further steam turbine is connected in series with the steam turbine. In order to obtain a compact construction, the gas compressors and the steam turbines are mounted on the same shaft. On the other hand, one gas compressor and one steam turbine may be mounted on a respective common shaft.

The efficiency of the steam turbine unit can be further improved in that, in the specific embodiment according to the invention, the water flowing through the steam line is in heat-exchanging contact during operation with the air flowing through the intercooler. More in particular, said heat-exchanging contact takes place according to the uniflow principle or according to the counterflow principle.

In other embodiments of the steam and gas turbine installation according to the invention, the steam turbines may be impulse steam turbines or radial steam turbines, the gas turbines may be centrifugal gas compressors or axial gas compressors, and the steam generator may be a once-through residual heat boiler.

The invention will now be explained in more detail with reference to a drawing, in which:
Figure 1 shows an embodiment of a multi-shaft steam and gas turbine installation according to prior art;
Figure 2 shows another embodiment of a single-shaft steam and gas turbine installation according to the prior art; and
Figures 3-9 show various embodiments of the steam and gas turbine installation according to the invention.

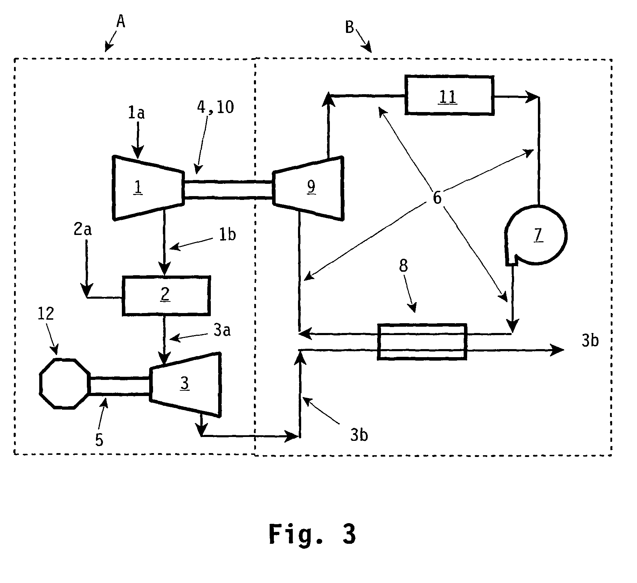

In the discussion of the embodiments of Figures 3-9, the same numerals will be used as for corresponding parts of the embodiments as shown in Figures 1 and 2.

In the embodiment of a steam and gas turbine installation according to the invention that is shown in Figure 3, the gas compressor 1 is mounted on one shaft 4, 10 together with the steam turbine 9. With this configuration of a steam and gas turbine installation according to the invention, the power generated by the steam turbine unit (B) is transmitted to the gas turbine 3 via the shaft 4, 10 and the gas compressor 1, so that all the power generated by this installation is transmitted to one shaft 5 for driving the load 12.

According to the invention, the steam turbine 9 is an impulse steam turbine. Such impulse steam turbines are of very robust, compact and economic construction, and it has become apparent that they are very suitable from a technical viewpoint for use on the scale for which the invention is intended. Furthermore, such steam turbines are characterized by a more efficient conversion of the power to a load via the gas turbine. This leads to a significant improvement as regards the overall performance/efficiency of the installation as a whole.

A characterising feature of the steam and gas turbine installation is the mechanical separation between the gas compressor 1 and the gas turbine 3, now that the two parts, unlike the embodiments that are shown in Figures 1 and 2 (prior art), are not mounted on the same shaft 4, 5. As a result of this mechanical separation between the gas compressor one and the gas turbine 3, it is no longer necessary to use additional, complicated coupling mechanisms.

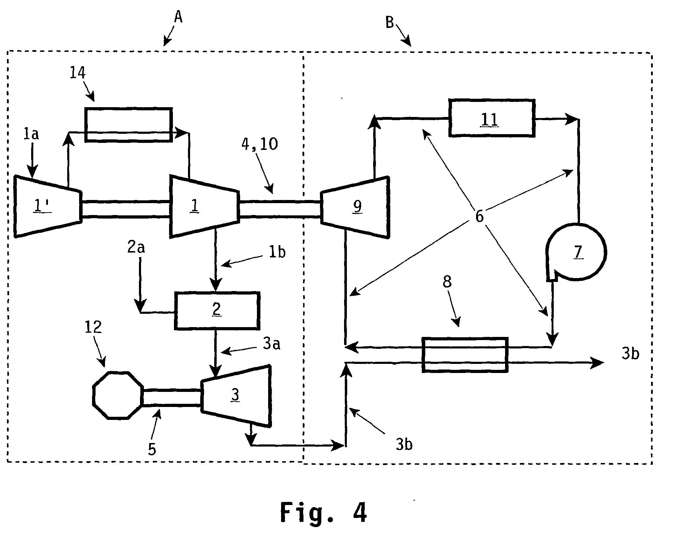

Another, more efficient embodiment of the steam and gas turbine installation is shown in Figure 4, in which an additional gas compressor 1' is mounted on the common shaft 4, 10 of the gas compressor 1 and the steam turbine 9. The air to be compressed is carried to the second gas compressor 1 via the inlet 1a, the first gas compressor 1' and an intercooler 14, after which the air is carried to the combustion chamber 2 via the pipe 1b. The multi-stage compression with intercooling of the air to be supplied enables a significant improvement of the efficiency of the installation. Although two gas compressors 1-1' are mounted on the shaft 4, 10 in Figure 4, it will be understood that several, series-connected gas compressors may be mounted on the same shaft 4, 10.

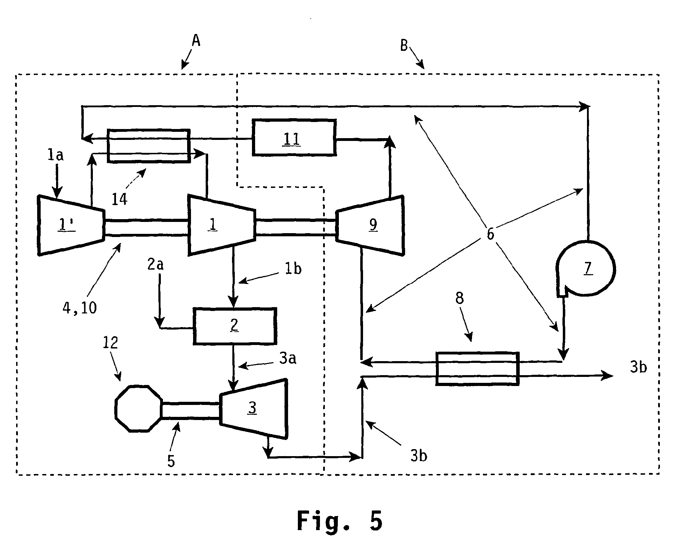

Figure 5 shows a special embodiment of the steam and gas turbine installation according to the invention that is shown in Figure 4. In said Figure 5, the intercooler is incorporated in the steam line 6 of the steam turbine unit (B), so that the condensed steam (water) from the condenser 11 comes into heat-exchanging contact with compressed air from the multi-stage gas compression combination 1'-1 that flows through the intercooler. The steam flowing through the steam line 6 and the air flowing through the gas compressors 1'-1 are in counterflow with each other; the heat exchange may also take place according to the uniflow principle, however.

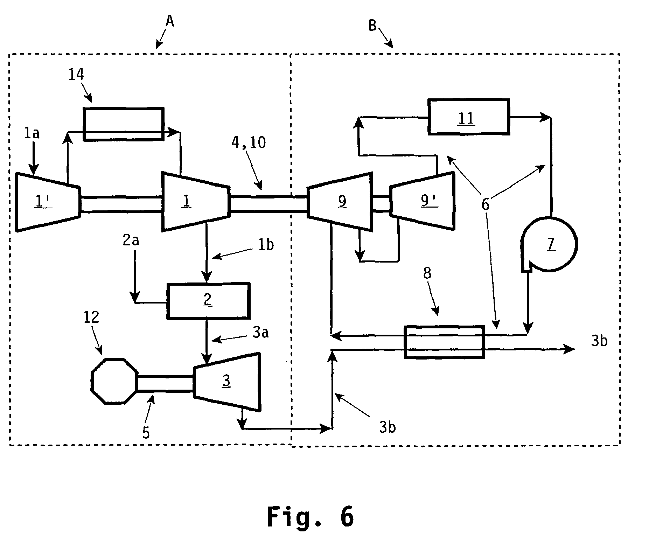

The embodiment of Figure 6 is substantially identical to the embodiment that is shown in Figure 4, with this difference that an additional steam turbine 9' is mounted on the shaft 4,10 in the embodiment of Figure 6, which steam turbine 9' is connected in series with the steam turbine 9. All the gas compressors 1, 1' and the steam turbines 9, 9' are mounted on the same shaft 4, 10.

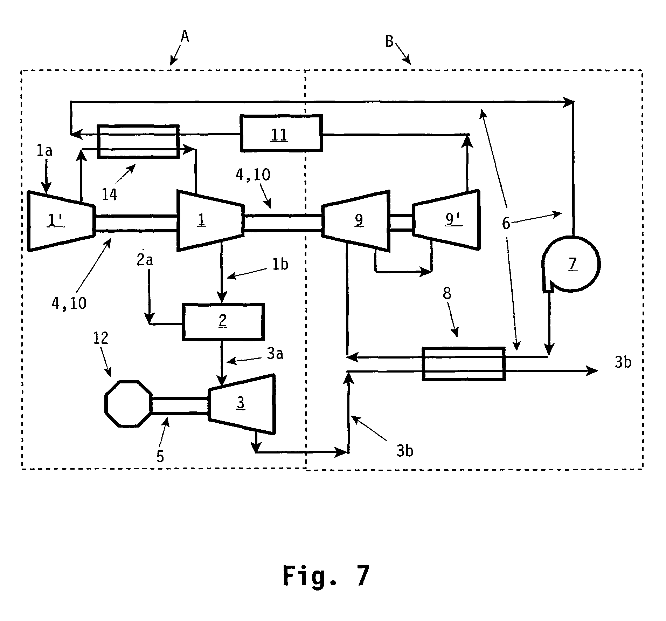

Figure 7 shows a combination of the embodiments of Figures 5 and 6.

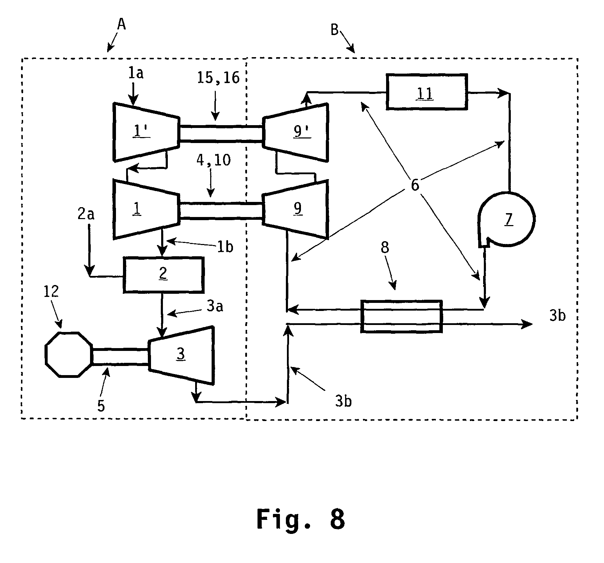

In Figure 8, each gas compressor 1-1' and each steam turbine 9-9' is mounted on a separate shaft (4, 10; 15, 16). Although this is not shown in the Figure, the intercooler 14 may be positioned between the series-connected gas compressors 1-1' (analogously to Figure 4). Analogously to the embodiment of Figure 7, this embodiment may be extended with the intercooler, which is incorporated in the steam line 6 from the steam turbine unit (B), in which the condensed steam (water) from the condenser 11 comes into heat-exchanging contact with the compressed air from the multi-stage gas compression combination 1'-1, which flows through the intercooler.

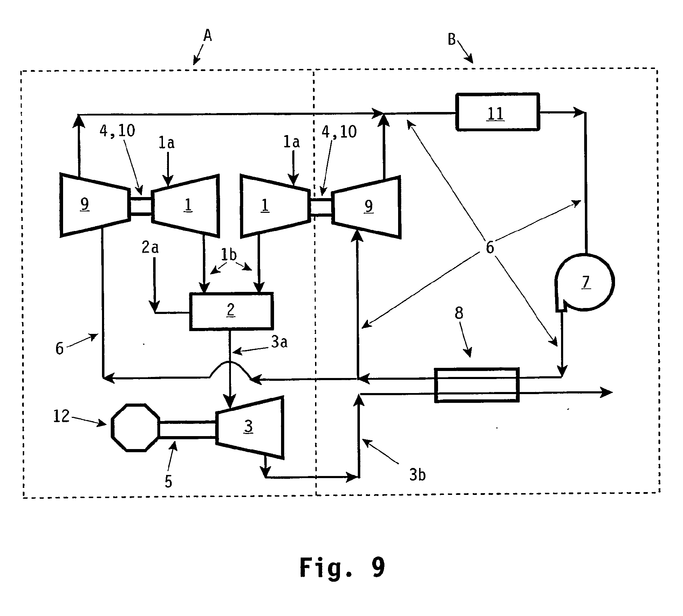

In Figure 9, several steam turbine and gas compressor units are connected in parallel. This embodiment is in particular very functional in those cases in which impulse steam turbines are combined with compressors, and more in particular with centrifugal compressors. The impulse steam turbines are of robust and durable construction, it is true, and inexpensive as regards their manufacture, but they are only available up to a specific output level. The installation as a whole can be significantly upgraded as regards the output thereof by connecting several impulse steam turbines 9, each combined with a (centrifugal) steam compressor 1 mounted on a separate shaft 4, 10, in parallel with one large combustion chamber 2 and one large gas turbine 3, as disclosed in Figure 9.

This makes it possible to use the installation for applications that were previously unattainable because of the technical limitations of the available components.

Likewise, the number of gas compressors and steam turbines may be extended to a number of components greater than two, analogously to the embodiments as shown in Figures 4-9.

It will be apparent that the illustrated embodiments of the steam and gas turbine installations according to the invention make it possible, by mechanically separating the gas compressor and the gas turbine and having the steam turbine drive the gas compressor, to obtain an installation exhibiting an improved load characteristic in comparison with the known steam and gas turbine devices, without using all kinds of mechanical coupling mechanisms, in which the power generated by the installation is transmitted in its entirety to one outgoing shaft for driving a load.

Characteristic of all the illustrated embodiments is the fact that when the gas turbine or the load is put out of operation in use (i.e. during active operation of combustion chamber 2), the gas compressor is driven via the steam turbine 9 at all times, so that the gas turbine can be put into operation quickly again. The gas turbine can be quickly brought up to speed again when using a continuously driven gas compressor. Only the steam turbine that drives the gas compressor needs to be.run up for starting up the installation. As soon as the gas compressor delivers pressure, the free gas turbine can run up the load from standstill without having to uncouple the load.

Furthermore, the heat-exchanging contact between the steam generator 8 and the combustion gases 3b from the gas turbine 3 can take place according to the uniflow principle or according to the counterflow principle.

## Claims

1. A steam and gas turbine installation comprising a gas turbine unit (A) and a steam turbine unit (B), in which the gas turbine unit (A) is built up in part of at least:
- a gas compressor (1) mounted on a compressor shaft (4), a combustion chamber (2) and a gas turbine (3) mounted on a gas turbine shaft (5); and in which steam turbine unit (B) is built up in part of:
- a closed steam line (6), at least comprising:
a pump (7), a steam generator (8), which is in heat-exchanging contact with combustion gases (3b) from the gas turbine (3) during operation, one or more steam turbines (9) mounted on a steam turbine shaft (10), as well as a condenser (11), and in which the steam turbine drives the gas compressor of the gas turbine unit during operation, **characterized in that** the one or more of said steam turbines is an impulse steam turbine and wherein the steam turbine drives at least one further gas compressor (1'), which is connected in series with the first gas compressor (1) via an intercooler (14).

2. A steam and gas turbine installation according to claim 1, **characterized in that** the steam turbine and the gas compressor are mounted on the same shaft (4, 10).

3. A steam and gas turbine installation according to claim 1 or 2, **characterized in that** the gas turbine is mounted on a different shaft (5) than the gas compressor.

4. A steam and gas turbine installation according to any one or more of the preceding claims, **characterized in that** at least one further steam turbine (9') is connected in series with the steam turbine (9).

5. A steam and gas turbine installation according to anyone or more of the preceding claims, **characterized in that** the gas compressors (1, 1') and the steam turbines (9, 9') are mounted on the same shaft (4, 10).

6. A steam and gas turbine installation according to anyone or more of the preceding claims, **characterized in that** one gas compressor (1, 1') and one steam turbine (9, 9') are mounted on a respective common shaft (4, 10; 15, 16).

7. A steam and gas turbine installation according to any one or more of the preceding claims, **characterized in that** the water flowing through the steam line (6) is in heat-exchanging contact during operation with the air flowing through the intercooler (14).

8. A steam and gas turbine installation according to claim 7, **characterized in that** said heat-exchanging contact takes place according to the uniflow principle.

9. A steam and gas turbine installation according to claim 8, **characterized in that** said heat-exchanging contact takes place according to the counterflow principle.

10. A steam and gas turbine installation according to any one or more of the preceding claims, **characterized in that** one or more of said steam turbines is a radial steam turbine.

11. A steam and gas turbine installation according to any one or more of the preceding claims, **characterized in that** one or more of said gas compressors is a centrifugal gas compressor.

12. A steam and gas turbine installation according to any one or more of the preceding claims, **characterized in that** one or more of said gas compressors is an axial gas compressor.

13. A steam and gas turbine installation according to any one or more of the preceding claims, **characterized in that** said steam generator is a once-through residual heat boiler.

## Patentansprüche

1. Dampf- und Gasturbinenanlage mit einer Gasturbineneinheit (A) und einer Dampfturbineneinheit (B), bei der die Gasturbineneinheit (A) zum Teil zumindest durch Folgendes gebildet ist:
- einen an einer Verdichterwelle (4) angebrachten Gasverdichter (1), eine Verbrennungskammer (2) und eine an einer Gasturbinenwelle (5) angebrachte Gasturbine (3); und bei der die Dampfturbineneinheit (B) zum Teil durch Folgendes gebildet ist:
- eine geschlossene Dampfleitung (6), die zumindest Folgendes aufweist: eine Pumpe (7), einen Dampfgenerator (8), der im Betrieb mit Verbrennungsgasen (3b) aus der Gasturbine (3) in Wärmeaustauschkontakt steht, eine oder mehrere an einer Dampfturbinenwelle (10) angebrachte Dampfturbine(n) (9) und einen Kondensor (11), und bei der die Dampfturbine im Betrieb den Gasverdichter der Gasturbineneinheit antreibt, **dadurch gekennzeichnet, dass** die eine oder mehreren Dampfturbine(n) eine Impulsdampfturbine ist bzw. Impulsdampfturbinen sind, und bei der die Dampfturbine mindestens einen weiteren Gasverdichter (1`) antreibt, der über einen Zwischenkühler (14) mit dem ersten Gasverdichter (1) in Reihe geschaltet ist.

2. Dampf- und Gasturbinenanlage nach Anspruch 1, **dadurch gekennzeichnet, dass** die Dampfturbine und der Gasverdichter an der gleichen Welle (4, 10) angebracht sind.

3. Dampf- und Gasturbinenanlage nach Anspruch 1 oder 2, **dadurch gekennzeichnet, dass** die Gasturbine an einer anderen Welle (5) angebracht ist als der Gasverdichter.

4. Dampf- und Gasturbinenanlage nach einem oder mehreren der vorhergehenden Ansprüche, **dadurch gekennzeichnet, dass** mindestens eine weitere Dampfturbine (9') mit der Dampfturbine (9) in Reihe geschaltet ist.

5. Dampf- und Gasturbinenanlage nach einem oder mehreren der vorhergehenden Ansprüche, **dadurch gekennzeichnet, dass** die Gasverdichter (1, 1') und die Dampfturbinen (9, 9') an der gleichen Welle (4, 10) angebracht sind.

6. Dampf- und Gasturbinenanlage nach einem oder mehreren der vorhergehenden Ansprüche, **dadurch gekennzeichnet, dass** ein Gasverdichter (1, 1') und eine Dampfturbine (9, 9') an einer dazugehörigen gemeinsamen Welle (4, 10; 15, 16) angebracht sind.

7. Dampf- und Gasturbinenanlage nach einem oder mehreren der vorhergehenden Ansprüche, **dadurch gekennzeichnet, dass** das durch die Dampfleitung (6) fließende Wasser im Betrieb mit der durch den Zwischenkühler (14) strömenden Luft in Wärmeaustauschkontakt steht.

8. Dampf- und Gasturbinenanlage nach Anspruch 7, **dadurch gekennzeichnet, dass** der Wärmeaustauschkontakt gemäß dem Gleichstromprinzip erfolgt.

9. Dampf- und Gasturbinenanlage nach Anspruch 8, **dadurch gekennzeichnet, dass** der Wärmeaustauschkontakt gemäß dem Gegenstromprinzip erfolgt.

10. Dampf- und Gasturbinenanlage nach einem oder mehreren der vorhergehenden Ansprüche, **dadurch gekennzeichnet, dass** eine oder mehrere der Dampfturbinen eine Radialdampfturbine ist bzw. Radialdampfturbinen sind.

11. Dampf- und Gasturbinenanlage nach einem oder mehreren der vorhergehenden Ansprüche, **dadurch gekennzeichnet, dass** einer oder mehrere der Gasverdichter ein Zentrifugalgasverdichter ist bzw. Zentrifugalgasverdichter sind.

12. Dampf- und Gasturbinenanlage nach einem oder mehreren der vorhergehenden Ansprüche, **dadurch gekennzeichnet, dass** einer oder mehrere der Gasverdichter ein Axialgasverdichter ist bzw. Axialgasverdichter sind.

13. Dampf- und Gasturbinenanlage nach einem oder mehreren der vorhergehenden Ansprüche, **dadurch gekennzeichnet, dass** der Dampfgenerator ein Durchlaufkessel für Restwärme ist.

## Revendications

1. Installation de turbine à vapeur et à gaz comprenant une unité de turbine à gaz (A) et une unité de turbine à vapeur (B), dans laquelle l'unité de turbine à gaz (A) est constituée en partie d'au moins :
- un compresseur de gaz (1) monté sur un arbre de compresseur (4), une chambre de combustion (2) et une turbine à gaz (3) montée sur un arbre de turbine à gaz (5) ; et dans laquelle l'unité de turbine à vapeur (B) est constituée en partie de :
- une conduite de vapeur fermée (6), comprenant au moins :
une pompe (7), un générateur de vapeur (8), qui est en contact thermique avec des gaz de combustion (3b) à partir de la turbine à gaz (3) au cours du fonctionnement, une ou plusieurs turbines à vapeur (9) montée (s) sur un arbre de turbine à vapeur (10), ainsi qu'un condenseur (11), et dans laquelle la turbine à vapeur entraîne le compresseur à gaz de l'unité de turbine à gaz au cours du fonctionnement, **caractérisée en ce qu'**une ou plusieurs desdites turbines à vapeur est une turbine à vapeur à impulsions et dans laquelle la turbine à vapeur entraîne au moins un compresseur à gaz supplémentaire (1'), qui est raccordé en série au premier compresseur à gaz (1) par l'intermédiaire d'un refroidisseur intermédiaire (14).

2. Installation de turbine à vapeur et à gaz selon la revendication 1, **caractérisée en ce que** la turbine à vapeur et le compresseur à gaz sont montés sur le même arbre (4, 10).

3. Installation de turbine à vapeur et à gaz selon la revendication 1 ou 2, **caractérisée en ce que** la turbine à gaz est montée sur un arbre différent (5) du compresseur à gaz.

4. Installation de turbine à vapeur et à gaz selon l'une quelconque ou plusieurs des revendications précédentes, **caractérisée en ce qu'**au moins une turbine à vapeur supplémentaire (9') est raccordée en série à la turbine à vapeur (9).

5. Installation de turbine à vapeur et à gaz selon l'une quelconque ou plusieurs des revendications précédentes, **caractérisée en ce que** les compresseurs de gaz (1, 1') et les turbines à vapeur (9, 9') sont montés sur le même arbre (4, 10).

6. Installation de turbine à vapeur et à gaz selon l'une quelconque ou plusieurs des revendications précédentes, **caractérisée en ce qu'**un compresseur à gaz (1, 1') et une turbine à vapeur (9, 9') sont montés sur un arbre commun respectif (4, 10 ; 15, 16).

7. Installation de turbine à vapeur et à gaz selon l'une quelconque ou plusieurs des revendications précédentes, **caractérisée en ce que** l'eau s'écoulant à travers la conduite de vapeur (6) est en contact thermique au cours du fonctionnement avec l'air s'écoulant à travers le refroidisseur intermédiaire (14).

8. Installation de turbine à vapeur et à gaz selon la revendication 7, **caractérisée en ce que** ledit contact d'échange de chaleur se produit selon le principe d'équi-courant.

9. Installation de turbine à vapeur et à gaz selon la revendication 8, **caractérisée en ce que** ledit contact thermique se produit selon le principe de contre-courant.

10. Installation de turbine à vapeur et à gaz selon l'une quelconque ou plusieurs des revendications précédentes, **caractérisée en ce qu'**une ou plusieurs desdites turbines à vapeur est une turbine à vapeur radiale.

11. Installation de turbine à vapeur et à gaz selon l'une quelconque ou plusieurs des revendications précédentes, **caractérisée en ce qu'**un ou plusieurs desdits compresseurs à gaz est un compresseur à gaz centrifuge.

12. Installation de turbine à vapeur et à gaz selon l'une quelconque ou plusieurs des revendications précédentes, **caractérisée en ce qu'**un ou plusieurs desdits compresseurs à gaz est un compresseur à gaz axial.

13. Installation de turbine à vapeur et à gaz selon l'une quelconque ou plusieurs des revendications précédentes, **caractérisée en ce que** ledit générateur de vapeur est une chaudière à chaleur résiduelle à passage unique.
